Europäisches Patentamt

European Patent Office

Office européen des brevets

(19)

(11) **EP 1 429 011 A1**

## (12) DEMANDE DE BREVET EUROPEEN

(43) Date de publication:
**16.06.2004 Bulletin 2004/25**

(51) Int Cl.⁷: **F02D 41/02**, F02D 11/10

(21) Numéro de dépôt: **03293045.5**

(22) Date de dépôt: **05.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **13.12.2002 FR 0215779**

(71) Demandeur: **Renault S.A.**
**92100 Boulogne Billancourt (FR)**

(72) Inventeur: **Fauvel, Francois**
**91470 Boullay les Troux (FR)**

(74) Mandataire: **Rougemont, Bernard et al**
**Renault Technocentre,**
**1 avenue du Golf,**
**Sce 0267 TCR GRA 1 55**
**78288 Guyancourt (FR)**

(54) **Méthode et système de commande du couple d'un moteur pour un véhicule automobile**

(57)    Selon une méthode ou un système de commande pour un groupe motopropulseur (1) d'un véhicule, le groupe motopropulseur (1) comportant un moteur (2) et une transmission (3, 3') pour changer de rapport de transmission :

- on reçoit une information de demande de puissance (Acc) ;

- on calcule une consigne à la roue d'une grandeur physique (CCroue) en fonction de l'information de demande de puissance (Acc) ;

- on calcule en outre une variable représentative (R) du rapport de transmission, par le rapport d'une vitesse d'entrée de boîte ($\omega$bv) ou d'une vitesse du moteur ($\omega$mot) sur une vitesse liée à la vitesse de la roue ($\omega$roue), même pendant les changements de rapport de transmission ;

- on calcule une consigne de couple moteur (CCmot) en fonction de la variable représentative (R) du rapport de transmission et de la consigne à la roue (CCroue).

- on commande le moteur (2) pour qu'il délivre un couple moteur en fonction de la consigne de couple moteur (CCmot).

Fig. 1

## Description

L'invention concerne une méthode et un système de commande du couple d'un moteur pour un véhicule, en particulier en déterminant un effort à la roue.

Classiquement, sur un véhicule automobile, un conducteur dispose d'une pédale d'accélérateur pour commander la puissance délivrée par un groupe motopropulseur entraînant le véhicule. La pédale d'accélérateur est par exemple reliée par l'intermédiaire d'un câble à un papillon d'ouverture de l'admission d'air dans le moteur, dans le cas d'un moteur à allumage commandé. Dans le cas d'un moteur Diesel, le câble est relié à une vanne commandant le débit de carburant injecté.

Plus récemment, il a été proposé de supprimer le câble et de doter la pédale d'accélérateur d'un capteur de position qui transmet une information de demande de puissance à un calculateur de consigne. Le calculateur de consigne détermine par exemple une consigne de couple à fournir par le moteur sur un vilebrequin. Le moteur comporte des moyens d'actionnement qui permettent d'agir sur le point de fonctionnement du moteur. Ces moyens d'actionnement sont par exemple un actionneur sur l'axe de papillon, ou des injecteurs délivrant une quantité de carburant. La consigne de couple est reçue par un contrôleur qui pilote les moyens d'actionnement pour faire délivrer au moteur le couple à fournir. La fonction du calculateur de consigne peut éventuellement être remplie par le contrôleur.

Ce système de commande sans câble permet de faire intervenir facilement d'autres systèmes qui agissent sur la commande de puissance du moteur, tels que des systèmes anti-patinage, contrôle de trajectoire, des régulateurs ou des limiteurs de vitesse. Dans le cas des régulateurs de vitesse, l'information de demande de puissance ne provient pas de la pédale d'accélérateur, mais du régulateur.

Dans le document FR 2 785 961, une méthode de commande est exposée pour le cas de transmissions automatiques telle qu'une boîte de vitesses automatique ou une boîte de vitesses robotisée. Selon cette méthode, une consigne de couple moteur est déterminée en dehors des phases de changement de rapport par la position d'une pédale d'accélérateur. Pendant les changements de rapport de transmission, la consigne est déterminée par un calculateur de boîte. Dans une phase finale du changement de rapport, la consigne de couple moteur est progressivement amenée vers celle déterminée par la position de l'accélérateur.

Si le conducteur n'a pas changé la position de l'accélérateur pendant la phase de changement de rapport, la consigne de couple moteur reste identique avant le changement de rapport et après. En conséquence, la force de traction du véhicule est modifiée en lien avec la modification du rapport de transmission.

Pour pallier cet inconvénient, le document US 6,434,466 propose une méthode de commande d'un groupe motopropulseur comportant une boîte de vitesses automatique, méthode dans laquelle l'information de demande de puissance est traduite par une consigne de couple d'entraînement des roues en fonction de la vitesse du véhicule. Ceci permet d'obtenir une force de traction du véhicule délivrée par le groupe motopropulseur indépendamment du rapport de transmission sélectionné. Cette consigne de couple d'entraînement des roues est ensuite traitée pour être convertie en consigne de couple moteur en fonction de l'état de la transmission, et en particulier du rapport de transmission sélectionné. La consigne de couple moteur est fournie au contrôleur.

La boîte de vitesses automatique comporte de manière classique un convertisseur hydraulique comprenant une roue de pompe entraînée par le vilebrequin du moteur et une roue de turbine entraînant un train d'engrenages. Pour simplifier, nous désignerons les roues respectivement par pompe et turbine. Un coupleur mécanique permet de lier en rotation sur commande la pompe et la turbine. Le train d'engrenages comporte des embrayages permettant de mettre en service certaines parties du train d'engrenages pour modifier le rapport de transmission. Le train d'engrenages entraîne à sa sortie un différentiel et les roues motrices du véhicule. La boîte de vitesses automatique comporte en outre un calculateur de boîte qui commande l'actionnement des embrayages et du coupleur mécanique pour agir sur l'état de la transmission. La fonction du calculateur de boîte peut aussi être remplie par un autre calculateur ou contrôleur.

L'état de la transmission est caractérisé par les vitesses de rotation des différents organes, le rapport de transmission engagé ou non, l'état engagé ou non du coupleur mécanique et le couple transmis. En fonction de cet état, selon la méthode du document US 6,434,466, une consigne de couple moteur est calculée, essentiellement en multipliant la consigne de couple aux roues par le rapport de transmission, en tenant compte de pertes par frottement dans la transmission et de l'effet multiplicateur de couple du convertisseur hydraulique.

Pendant un changement de rapport de transmission, la consigne de couple moteur est prise en charge complètement par le calculateur de boîte, pour adapter le couple moteur pendant les différentes phases du changement de rapport. Il prend en compte une consigne de couple moteur de reprise qui sera donnée après le changement de rapport, pour amener progressivement la consigne de couple vers la consigne de reprise. Cependant, dans le cas d'une consigne de couple moteur déterminée par l'intermédiaire d'une consigne à la roue, la consigne du couple moteur dépend du rapport de transmission, lequel est indéterminé pendant la phase de changement de rapport. Selon le document US 6,434,466, soit la valeur du rapport de transmission est considérée constante à la valeur avant le début du changement de rapport, soit elle est calculée fictivement à des valeurs transitoires vers la valeur cible de fin de changement de rapport.

Cependant, dans le premier cas, la valeur du rapport de transmission subit une discontinuité à la fin du changement de rapport qui se traduit par une discontinuité de la consigne de couple, ce qui est néfaste à l'agrément de conduite et génère des à-coup préjudiciables à la durée de vie des éléments mécaniques. Dans le deuxième cas, il est nécessaire de connaître la valeur cible du rapport de transmission, ce qui est contraignant pour la mise en oeuvre du calcul.

Par ailleurs, le document EP 1 188 602 montre un véhicule ayant un groupe motopropulseur comportant une transmission à variation continue (souvent désigné par l'acronyme anglais CVT). La méthode de commande de ce groupe motopropulseur comporte également une phase de détermination d'une consigne de couple d'entraînement des roues du véhicule et la prise en compte du rapport de transmission dans le calcul d'une consigne de couple moteur.

Cependant, aucune des méthodes exposées ne s'adapte à tout type de transmission, par exemple à une transmission comportant une boîte de vitesses manuelle ou une boîte de vitesses robotisée.

C'est donc un objectif de l'invention de proposer une méthode et un système de commande d'un groupe motopropulseur d'un véhicule exprimant une information de demande de puissance sous la forme d'une consigne d'une grandeur mécanique aux roues du véhicule, et qui permette de calculer une consigne de couple moteur, quelque soit le type de transmission, tout en assurant la plus grande continuité possible dans la force de traction du véhicule.

Avec cet objectif en vue, l'invention a pour objet une méthode de contrôle pour un groupe motopropulseur d'un véhicule, le groupe motopropulseur comportant un moteur et une transmission pour changer de rapport de transmission, méthode selon laquelle :

- on reçoit une information de demande de puissance ;

- on calcule une consigne à la roue d'une grandeur physique en fonction de l'information de demande de puissance ;

- on en déduit une consigne du couple moteur ;

- on commande le moteur pour qu'il délivre un couple moteur en fonction de la consigne de couple moteur ;

caractérisée en ce que :

- on calcule en outre une variable représentative du rapport de transmission, par le rapport d'une vitesse d'entrée de boîte ou d'une vitesse du moteur sur une vitesse liée à la vitesse de la roue, même pendant les changements de rapport de transmission ;

- on calcule la consigne de couple moteur en fonction de la variable représentative du rapport de transmission et de la consigne à la roue.

Grâce à l'invention, on dispose d'une méthode qui s'applique à tout type de transmission, que ce soit une boîte de vitesses manuelle, une boîte de vitesses robotisée, une boîte de vitesses automatique ou une transmission à variation continue. De plus, comme la variable représentative est calculée en permanence, sur la base de vitesses de rotation d'éléments mécaniques, aucune discontinuité de calcul n'est introduite, ce qui évite de générer des à-coups dans l'entraînement du véhicule lors des changements de rapport de transmission.

On comprendra aisément que l'expression de la variable représentative du rapport de transmission dépend du choix de la grandeur physique de la consigne à la roue. Si la consigne à la roue est exprimée en force de traction, la variable représentative du rapport de transmission prend en compte le rayon de la roue pour exprimer un développement linéaire. Par contre, si la consigne à la roue est exprimée en couple, la variable représentative du rapport de transmission est calculée avec la vitesse de rotation des roues.

Par ailleurs, quelque soit le nombre de roues motrices, la consigne à la roue représente la somme de chaque valeur à appliquer à chaque roue motrice. De même, la vitesse de la roue doit être considérée comme la vitesse moyenne des roues. On pourra aussi prendre par exemple la vitesse de rotation d'une couronne de différentiel ou celle d'un organe dont la vitesse de rotation est liée directement à celle des roues.

Dans un premier mode de réalisation, la transmission est une boîte de vitesses manuelle et la variable représentative du rapport de transmission est le rapport de la vitesse de rotation du moteur sur la vitesse de rotation de la roue.

En dehors des phases de changement de rapport, la variable représentative correspond effectivement au rapport de transmission réel. Durant les changements de rapport, la consigne de couple moteur reste calculée comme en dehors des changements de rapports. Ceci permet au conducteur de contrôler le moteur sans difficultés durant ces phases. En effet, lorsque le conducteur relève le pied de la pédale d'accélérateur lors du changement de rapport, la consigne de couple à la roue chute. La consigne de couple moteur chute donc également. Durant cette phase, ainsi que pendant le reste du changement de rapport, la consigne de couple moteur évolue de façon continue par rapport à la position de la pédale d'accélérateur. Ainsi, grâce à l'invention, un véhicule équipé d'une boîte de vitesses manuelle bénéficie de l'avantage procuré par le procédé de commande avec une consigne à la roue.

Dans un deuxième mode de réalisation, la transmission est une boîte de vitesses robotisée et la variable représentative du rapport de transmission est le rapport de la vitesse de rotation du moteur sur la vitesse de rotation de la roue.

Dans un troisième mode de réalisation, la transmission est une boîte de vitesses automatique comportant un convertisseur hydraulique et la variable représentative du rapport de transmission est le rapport de la vitesse de rotation d'une turbine du convertisseur hydraulique sur la vitesse de rotation de la roue du véhicule.

Dans le cas d'une boîte de vitesses automatique comme dans le cas d'une boîte de vitesses robotisée, un calculateur de boîte détermine une consigne de couple moteur pendant les changements de rapport. Grâce à l'invention, la variable représentative du rapport de transmission évolue en continu pendant le changement de rapport de telle sorte que le procédé selon l'invention calcule une consigne de couple de reprise, laquelle prend en compte le rapport de transmission effectif, puisque basé sur l'observation des vitesses effectives, et non sur un objectif ou une prévision. Aussi, à la fin du changement de rapport, le calculateur de boîte délivre une consigne de couple moteur qui est poursuivie, en continuité, par une consigne selon la méthode de consigne à la roue.

Dans un quatrième mode de réalisation, la transmission est une transmission à variation continue comportant un convertisseur hydraulique et la variable représentative du rapport de transmission est le rapport de la vitesse de rotation d'une turbine du convertisseur hydraulique sur la vitesse de rotation de la roue du véhicule.

Ainsi, la méthode de détermination d'une consigne moteur par une consigne à la roue peut s'appliquer par l'observation des organes du groupe motopropulseur, sans qu'il soit nécessaire que le calculateur de boîte, qui pilote la transmission, ne délivre une information de rapport de transmission.

Dans le cas où la variable représentative du rapport de transmission est le rapport de la vitesse de rotation de la turbine du convertisseur hydraulique sur la vitesse de rotation de la roue du véhicule, il se peut que le résultat soit très imprécis si les vitesses sont à la limite de la sensibilité des capteurs, c'est-à-dire quand la vitesse du véhicule est très faible. Cependant, dans ce cas, aucun changement de rapport n'est engagé. On prendra alors avantageusement pour la variable représentative du rapport de transmission une valeur mémorisée et fonction du rapport sélectionné.

D'une manière avantageuse, la consigne de couple moteur est calculée en outre en fonction d'une estimation des pertes mécaniques dans l'entraînement du véhicule, et/ou de l'inertie des pièces entraînées en rotation par le groupe motopropulseur. Ainsi, la force de traction effectivement obtenue est très proche de la consigne à la roue.

De préférence, la consigne à la roue est fonction en outre de la vitesse du véhicule. En général, la consigne à la roue est décroissante en fonction de la vitesse du véhicule.

L'information de demande de puissance provient par exemple d'une pédale d'accélérateur, d'un régulateur de vitesse, ou d'un limiteur de vitesse. Elle provient, le cas échéant, de manière prioritaire d'un système de sécurité tel qu'un système antipatinage ou de contrôle de trajectoire. Ces systèmes d'assistance expriment simplement leur consigne en grandeur physique à la roue, ce qui facilite la conception d'un nouveau véhicule intégrant ces systèmes, ou d'une nouvelle transmission, quelque soit son type. En effet, il n'est pas nécessaire à ces systèmes de calculer de consigne de couple moteur prenant en compte l'état de la transmission. Les échanges d'informations entre les systèmes sont ainsi limités, ce qui simplifie la mise en oeuvre des systèmes.

Dans le cas d'une transmission comportant un convertisseur de couple, une consigne de couple intermédiaire à la turbine est affectée par un coefficient de convertisseur pour calculer la consigne de couple moteur, le coefficient de convertisseur étant fonction du glissement entre la turbine et une pompe du convertisseur. Ainsi, la modification du couple par le convertisseur est prise en compte.

L'invention a aussi pour objet un système de commande d'un groupe motopropulseur d'un véhicule, le groupe motopropulseur comportant un moteur et une transmission pour changer de rapport de transmission, le système comportant :

- des moyens d'entrée pour recevoir une information de demande de puissance ;

- des moyens pour calculer une consigne à la roue d'une grandeur physique en fonction de l'information de demande de puissance ;

- des moyens pour déduire de la consigne à la roue une consigne du couple moteur ;

- des moyens de commande du moteur pour qu'il délivre un couple moteur en fonction de la consigne de couple moteur.

Selon l'invention, le système comporte en outre des moyens pour calculer en outre une variable représentative du rapport de transmission, par le rapport d'une vitesse d'entrée de boîte ou d'une vitesse du moteur sur une vitesse liée à la vitesse de la roue, même pendant les changements de rapport de transmission, la consigne de couple moteur étant calculée en fonction de la variable représentative du rapport de transmission et de la consigne à la roue.

L'invention sera mieux comprise et d'autres particularités et avantages apparaîtront à la lecture de la description qui va suivre, la description faisant référence aux dessins annexés parmi lesquels :

- la figure 1 est une vue schématique d'un groupe motopropulseur à boîte de vitesses robotisée ou boîte de vitesses manuelle auquel l'invention s'applique ;

- la figure 2 est une vue schématique d'un groupe motopropulseur à boîte de vitesses automatique ou transmission à variation continue auquel l'invention s'applique ;

- la figure 3 est un diagramme fonctionnel du procédé selon l'invention pour une boîte de vitesses manuelle ;

- la figure 4 est un diagramme fonctionnel du procédé selon l'invention pour une transmission automatique.

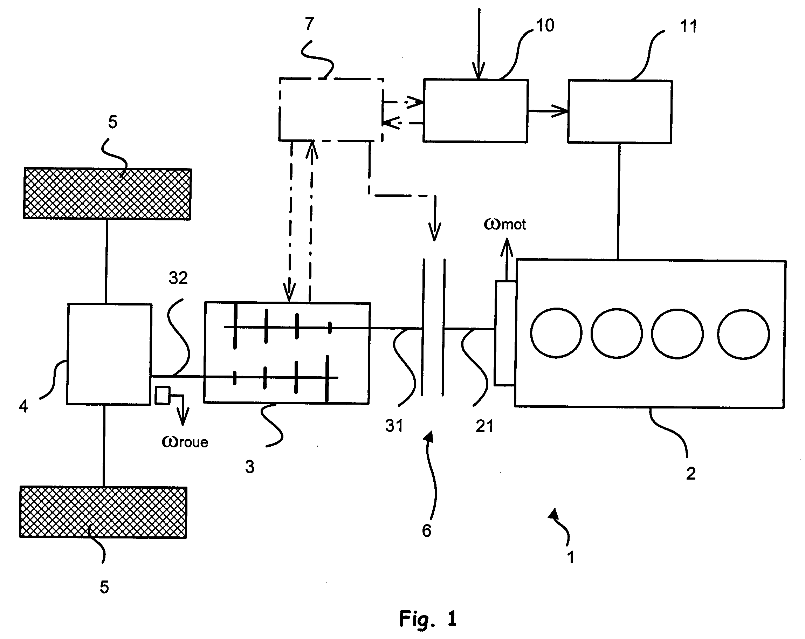

Un exemple de système de traction d'un véhicule conforme à l'invention est montré sur la figure 1. Ce système comprend un groupe motopropulseur 1 destiné à entraîner des roues 5. Le groupe motopropulseur comporte un moteur 2, une boîte de vitesses 3 et un différentiel 4 lié aux roues 5. Le moteur 2 comporte un vilebrequin 21 qui est destiné à transmettre un couple à un arbre d'entrée 31 de la boîte de vitesses 3 par l'intermédiaire d'un embrayage 6. la boîte de vitesses comporte un arbre de sortie 32 destiné à entraîner le différentiel 4.

La boîte de vitesses 3 est par exemple une boîte de vitesses manuelle dans laquelle les rapports de transmission sont sélectionnés classiquement par le conducteur du véhicule. Dans ce cas, l'embrayage est également commandé manuellement par le conducteur.

La boîte de vitesses 3 peut aussi être une boîte de vitesses robotisée dans laquelle les rapports de transmission sont déterminés par un calculateur de boîte 7, représenté en traits pointillés. Des actionneurs, non représentés, pilotés par le calculateur de boîte 7 agissent sur les organes de la boîte de vitesses robotisée pour sélectionner un rapport de transmission. Dans ce cas, l'embrayage 6 est également commandé par des actionneurs, non représentés, et agissant sous le contrôle du calculateur de boîte 7. Le document FR 2 785 961 donne une définition d'une boîte de vitesses robotisée.

Un calculateur de consigne 10 détermine une consigne finale de couple moteur CCmf qu'il transmet à un contrôleur 11 du moteur. Le contrôleur 11 pilote le moteur pour qu'il délivre un couple aussi proche que possible de la consigne de couple moteur CCmf.

Le groupe motopropulseur 1 comporte des capteurs pour délivrer une information ωroue indiquant la vitesse de rotation du différentiel et une information ωmot indiquant la vitesse de rotation du moteur. En général, ces vitesses de rotation sont déjà mesurées, et la mise en oeuvre de l'invention ne nécessite pas d'ajouter des capteurs spécifiques. L'information est éventuellement rendue disponible sur un réseau numérique embarqué dans le véhicule.

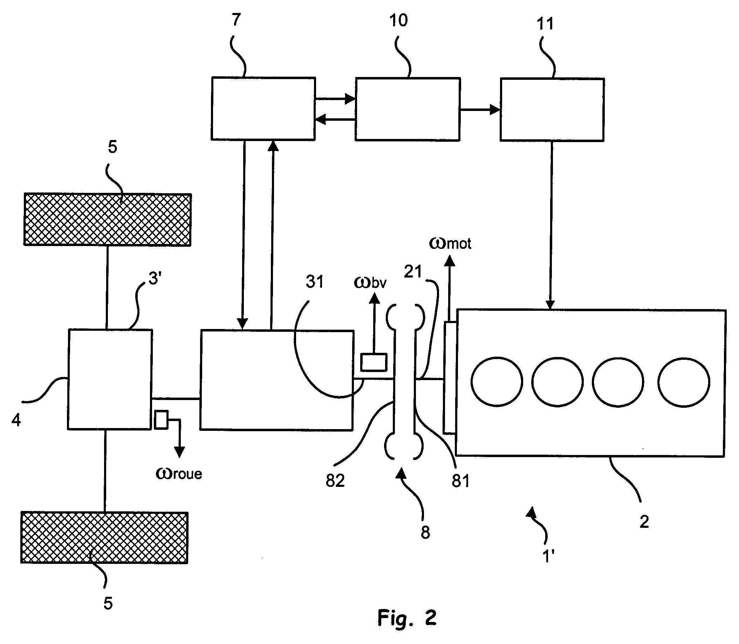

La figure 2 représente le cas d'un groupe motopropulseur 1' comportant un convertisseur 8 hydraulique pour transmettre le couple délivré par le moteur 2. Les mêmes références sont utilisées pour désigner les mêmes éléments que sur la figure 1. Le convertisseur 8 fait par exemple partie d'une boîte de vitesses automatique ou d'une transmission à variation continue 3'. Le convertisseur 8 comporte une pompe 81 montée directement sur le vilebrequin 21, et une turbine 82 liée à un arbre d'entrée 31 de la boîte de vitesses automatique ou de la transmission à variation continue. Un coupleur, non représenté, permet de lier sur commande la pompe 81 et la turbine 82, de telle sorte qu'ils tournent à la même vitesse de rotation. Dans ce cas, le convertisseur est dit dans un mode ponté. Dans le cas contraire, le convertisseur est dans un mode déponté, et un glissement relatif entre la pompe et la turbine est possible.

Le groupe motopropulseur 1' comporte en outre un capteur délivrant une information ωbv indiquant la vitesse de rotation de l'arbre d'entrée 31, qui est également la vitesse de rotation de la turbine.

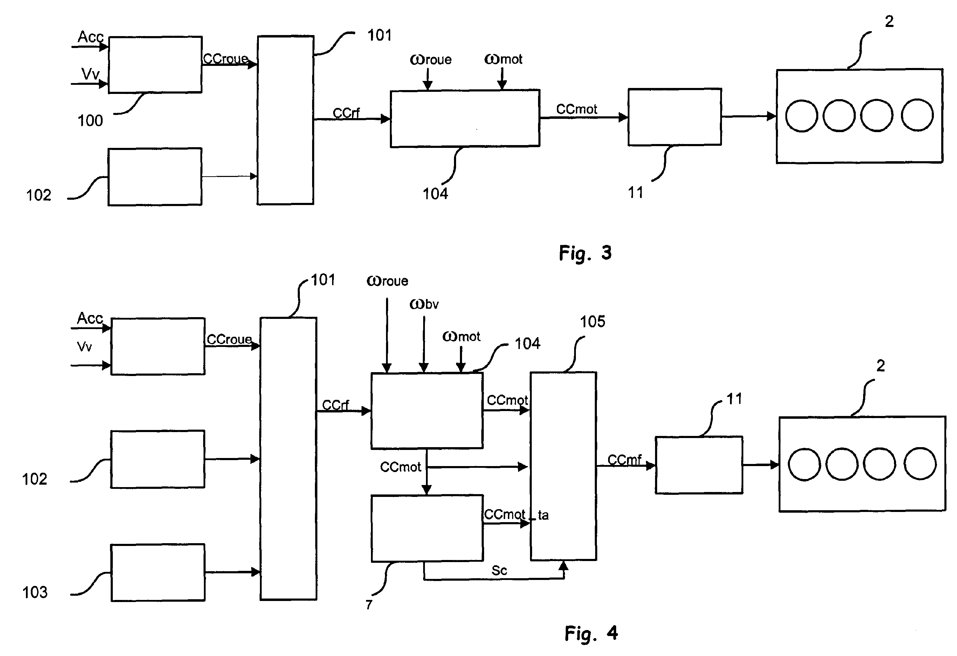

La figure 3 montre un diagramme fonctionnel du procédé de commande du moteur 2 appliqué à un groupe motopropulseur 1 comportant une boîte de vitesses manuelle. Un bloc 100 reçoit une information de demande de puissance Acc par une pédale d'accélérateur, et une information de vitesse du véhicule Vv. La vitesse du véhicule Vv est par exemple déduite de l'information de vitesse du différentiel ωroue. Le bloc 100 détermine une consigne de couple aux roues CCroue, par exemple grâce à une cartographie mémorisée en fonction de la position de l'accélérateur Acc et de la vitesse du véhicule Vv. Cette consigne tient compte éventuellement d'un style de conduite ou d'un type de route sur laquelle le véhicule circule. Un exemple de détermination de la consigne aux roues est montré sur la figure 3 du document EP 1 188 602.

D'autres systèmes peuvent aussi exprimer une consigne de couple aux roues, tels qu'un répartiteur électronique de freinage et de contrôle de trajectoire 102. Un premier bloc de sélection 101 reçoit ces consignes et en sélectionne une en fonction d'un degré de priorité ou selon un choix du conducteur. Au final, le premier bloc de sélection 101 délivre une consigne finale de couple CCrf. Cette consigne finale de couple CCrf est reçue par un bloc de conversion 104. Le bloc de conversion 104 reçoit les informations de vitesse de roue ωroue et de moteur ωmot et détermine une consigne primaire de couple moteur CCmot. La consigne primaire de couple moteur CCmot est transmise au contrôleur 11 qui pilote le moteur 2.

Dans le cas d'un groupe motopropulseur comportant une boîte de vitesses robotisée, une boîte de vitesses automatique ou une transmission à variation continue, le procédé selon l'invention est représenté par le diagramme de la figure 4. Une consigne de couple aux roues CCroue ainsi qu'une consigne finale de couple CCrf sont déterminées de la même manière que précédemment. Le premier bloc de sélection 101 reçoit éventuellement en plus une consigne en provenance d'un régulateur de vitesse 103.

Le bloc de conversion 104' transmet la consigne primaire de couple moteur CCmot au calculateur de boîte 7 d'une part, et d'autre part à un deuxième bloc de sélection 105. Le calculateur de boîte 7 détermine une consigne de couple moteur transitoire CCmot_ta pendant les phases de changement de rapport, ainsi qu'un signal de changement Sc, indiquant si une phase de changement de rapport est en cours ou non. Le deuxième bloc de sélection 105 reçoit les consignes primaire et transitoire de couple moteur CCmot et CCmot_ta, ainsi que le signal de changement Sc, et sélectionne, sur une sortie CCmf, la consigne primaire CCmot quand aucun changement de rapport n'est en cours, et la consigne transitoire CCmot_ta quand un changement de rapport est en cours. La consigne finale de couple moteur CCmf est transmise au contrôleur 11 qui pilote le moteur 2 pour qu'il délivre un couple se rapprochant de la consigne finale de couple moteur CCmf.

Dans le cas d'une boîte de vitesses 3' avec un convertisseur hydraulique 8, le bloc de conversion 104' reçoit également l'information de vitesse d'arbre d'entrée ωbv.

Dans un premier mode de réalisation, le groupe motopropulseur comporte une boîte de vitesses manuelle 3. Lorsque le véhicule est en fonctionnement, le moteur 2 fonctionne et délivre un couple sur le vilebrequin 21. En se référant à la figure 1, le vilebrequin tourne à une vitesse ωmot et entraîne en rotation l'arbre d'entrée 31 par l'intermédiaire de l'embrayage 6. L'arbre de sortie 32 est entraîné avec un rapport de vitesses entre l'entrée et la sortie fonction du rapport sélectionné. L'arbre de sortie 32 entraîne le différentiel 4 qui entraîne les roues 5. La moyenne des vitesses de rotation des roues 5 est la vitesse du différentiel 4. Aussi un capteur de vitesse sur le différentiel donne une indication significative de la vitesse des roues ωroue.

En se référant à la figure 3, le bloc de conversion 104 détermine tout d'abord une variable représentative du rapport de réduction R, selon la formule (1) :

$$R = \frac{\omega roue}{\omega mot} \tag{1}$$

Le rapport R est calculé en permanence, même pendant les phases de changement de rapport. Puis, le bloc conversion 104 détermine la consigne de couple moteur CCmot selon la formule (2) suivante :

$$CCmot = \left( CCrf + J_{CC} \cdot \frac{d\omega roue}{dt} \right) \cdot R + Cabs\left( CCrf, \omega roue, Thuile, rapport \right)$$

où :

- *Jcc* est une inertie de la chaîne cinématique comprise entre le vilebrequin et les roues, ramenée aux roues, exprimée en kg.m$^2$.

- *Cabs* est un couple absorbé par la boîte de vitesses, exprimé en N.m. Il peut être calculé selon un modèle mathématique et physique, ou issu d'une cartographie.

- *Thuile* est une température d'huile de boîte de vitesses.

- *rapport* est une information sur le rapport sélectionné.

Pendant les phases de changement de rapport, le couple absorbé Cabs est par exemple maintenu constant, jusqu'à ce qu'une information sur le nouveau rapport sélectionné soit disponible. A ce moment, Cabs est à nouveau évalué, en fonction du nouveau rapport sélectionné.

Le moment d'inertie prend en compte celui du vilebrequin, dans le cas où il n'est pas pris en considération dans l'application de la consigne de couple moteur par le contrôleur 11. Par contre, si le contrôleur prend en compte l'inertie du vilebrequin pour que le couple effectif en sortie de vilebrequin corresponde à la consigne, le bloc de conversion 104 ne prend pas en considération ledit moment d'inertie du vilebrequin, pour éviter qu'il n'intervienne deux fois. De même, l'inertie et le couple absorbé par des accessoires tels qu'un alternateur, une pompe de climatiseur, peuvent être pris en considération par le bloc de conversion 104 si ceux-ci ne sont pas pris en considération par le contrôleur 11.

Dans certaines configurations, la vitesse de roue ωroue ou sa dérivée est filtrée. Ce filtrage peut faire apparaître un retard dans cette information. Comme pendant un changement de vitesse, la variation de vitesse peut être assez importante, à cause de la rupture de couple par exemple dans le cas d'une boîte de vitesses manuelle ou d'une boîte de vitesses robotisée, l'indication de cette variation peut être en décalage par rapport à la situation réelle. La consigne de couple moteur est alors inadaptée et pourrait générer des à-coup dans la commande de couple du moteur. Ainsi, il est préférable de considérer la variation de vitesse de roue dωroue/dt nulle pendant les changements de rapport pour l'application de la formule (2).

Ainsi, grâce à l'invention, la consigne de couple moteur CCmot est déterminée en permanence, et, lorsque les rapports sont engagés, la consigne de couple moteur est avantageusement déterminée par l'intermédiaire de la consigne de couple aux roues. De plus, la prise en compte des pertes mécaniques et de l'inertie des pièces en mouvement permet de s'affranchir de différences ressenties dans la conduite à cause de variations des pertes ou de l'influence de l'inertie en fonction de l'état de la transmission.

Dans un deuxième mode de réalisation, le groupe motopropulseur 1 comporte une boîte de vitesses robotisée 3. La transmission de couple du moteur vers les roues s'effectue comme dans le premier mode de réalisation.

En se référant à la figure 4, le bloc de conversion 104' détermine tout d'abord également la variable représentative du rapport de réduction R, selon la formule (1). Le rapport R est aussi calculé en permanence. Puis, le bloc conversion 104' détermine la consigne primaire de couple moteur CCmot selon la formule (2), même pendant les phases de changement de rapport.

Pendant les phases de changement de rapport, le calculateur de boîte 7 pilote les actionneurs de la boîte de vitesses robotisée et de l'embrayage 6. Il détermine également une consigne transitoire de couple CCmot_ta. Pendant la phase finale du changement de rapport, le calculateur prend comme consigne de couple de reprise la consigne primaire de couple moteur CCmot. Ainsi, la consigne transitoire de couple moteur CCmot_ta est amenée progressivement vers la consigne de couple de reprise, c'est-àdire vers la consigne primaire de couple moteur CCmot. Ainsi, à la fin du changement de rapport, la continuité de la consigne de couple moteur est garantie. L'indétermination de la consigne de reprise dans la cas d'un couple moteur déterminé par l'intermédiaire du couple aux roues est levée. Grâce à l'invention, le couple moteur peut être déterminé par l'intermédiaire du couple aux roues sans risque de générer des à-coups dans la force de traction du véhicule.

Selon un troisième mode de réalisation, le groupe motopropulseur comporte une boîte de vitesses automatique 3'. En se référant à la figure 2, le vilebrequin 21 tourne à une vitesse ωmot et entraîne en rotation l'arbre d'entrée 31 à une vitesse ωbv par l'intermédiaire du convertisseur 8. Dans le mode déponté, il existe un glissement entre la pompe 81 et la turbine 82. Les vitesses ωmot et ωbv ne sont pas identiques, de même que le couple moteur sur le vilebrequin 21 n'est pas identique au couple reçu par l'arbre d'entrée 31. Dans le mode ponté, les vitesses ωmot et ωbv sont identiques, de même que le couple moteur sur le vilebrequin 21 et le couple reçu par l'arbre d'entrée 31. L'arbre de sortie 32 est entraîné avec un rapport de vitesses entre l'entrée et la sortie fonction du rapport sélectionné.

Dans le cas du mode ponté, le bloc de conversion 104' et le calculateur de boîte 7 fonctionnent comme dans le deuxième mode de réalisation. Par contre, dans le mode déponté, la variable représentative du rapport de transmission R est calculée selon la formule (3) :

$$R = \frac{\omega roue}{\omega bv} \tag{3}$$

Une consigne intermédiaire de couple CCbv est calculée selon la formule (4):

$$CCbv = \left( CCrf + J_{CC} \cdot \frac{d\omega roue}{dt} \right) \cdot R + Cabs(CCrf, \omega roue, Thuile, rapport)$$

$$(4)$$

Le glissement entre la pompe 81 et la turbine 82 est caractérisé par le rapport

$$i = \frac{\omega bv}{\omega mot} \qquad (5)$$

Si i<1, on considère que le convertisseur est dans un mode de tirage, et la consigne primaire de couple moteur est calculée selon la formule (6) :

$$CCmot = \frac{CCbv}{Ktir(i)} \qquad (6)$$

Si i>1, on considère que le convertisseur est dans un mode rétro, et la consigne primaire de couple moteur est calculée selon la formule (7) :

$$CCmot = CCbv.Kret(i) \qquad (7)$$

Les coefficients Ktir et Kret sont des facteurs d'amplification hydraulique caractéristiques du convertisseur et calculés en fonction de i par exemple par interpolation dans des cartographies.

Comme dans les modes de réalisation précédents, la consigne primaire de couple moteur peut être corrigée pour prendre en compte l'inertie du vilebrequin et les pertes et l'inertie des accessoires. L'arbitrage entre la consigne primaire et la consigne transitoire est réalisé également de la même manière que dans le deuxième mode de réalisation par le deuxième bloc de sélection 105, avec les mêmes effets et les mêmes avantages.

Dans un quatrième mode de réalisation, le groupe motopropulseur comporte une transmission à variation continue 3', éventuellement équipée d'un convertisseur hydraulique 8. La variation de rapport de transmission s'effectuant de manière continue, le procédé selon l'invention s'applique continuement. La particularité dans ce mode de réalisation concerne le calcul de l'effet d'inertie. La consigne intermédiaire de couple est calculée selon la formule (8) :

$$CCbv = \left( CCrf + J_{CC2} \cdot \frac{d\omega roue}{dt} \right) \cdot R + J_{CC1} \cdot \frac{d\omega bv}{dt} + Cabs \quad (8)$$

dans laquelle $Jcc1$ est l'inertie des éléments en mouvement avec l'arbre d'entrée 31, $Jcc2$ est l'inertie des éléments en mouvement avec les roues, exprimée par rapport aux roues. $Jcc1$ comprend par exemple l'inertie de l'arbre d'entrée 31 et celle de la turbine 82. Jcc2 comprend par exemple l'inertie de l'arbre de sortie 32, du différentiel 4, des arbres de transmissions et des roues 5.

Le fonctionnement du bloc de conversion 104' ne diffère pas par ailleurs de celui du deuxième ou du troisième mode de réalisation.

**Revendications**

**1.** Méthode de commande pour un groupe motopropulseur (1) d'un véhicule, le groupe motopropulseur (1) comportant un moteur (2) et une transmission (3, 3') pour changer de rapport de transmission, méthode selon laquelle :

- on reçoit une information de demande de puissance (Acc) ;

- on calcule une consigne à la roue d'une grandeur physique (CCroue) en fonction de l'information de demande de puissance (Acc) ;

- on en déduit une consigne du couple moteur (CCmot) ;

- on commande le moteur (2) pour qu'il délivre un couple moteur en fonction de la consigne de couple moteur (CCmot) ;

**caractérisée en ce que** :

- on calcule en outre une variable représentative (R) du rapport de transmission, par le rapport d'une vitesse d'entrée de boîte ($\omega$bv) ou d'une vitesse du moteur ($\omega$mot) sur une vitesse liée à la vitesse de la roue ($\omega$roue), même pendant les changements de rapport de transmission ;

- on calcule la consigne de couple moteur (CCmot) en fonction de la variable représentative (R) du rapport de transmission et de la consigne à la roue (CCroue).

2. Méthode selon la revendication 1, **caractérisée en ce que** la transmission est une boîte de vitesses manuelle (3) et la variable représentative (R) du rapport de transmission est le rapport de la vitesse de rotation du moteur ($\omega$mot) sur la vitesse de rotation de la roue ($\omega$roue).

3. Méthode selon la revendication 1, **caractérisée en ce que** la transmission est une boîte de vitesses robotisée (3) et la variable représentative (R) du rapport de transmission est le rapport de la vitesse de rotation du moteur ($\omega$mot) sur la vitesse de rotation de la roue ($\omega$roue).

4. Méthode selon la revendication 1, **caractérisée en ce que** la transmission est une boîte de vitesses automatique comportant un convertisseur hydraulique (8) et la variable représentative (R) du rapport de transmission est le rapport de la vitesse de rotation ($\omega$bv) d'une turbine (82) du convertisseur hydraulique sur la vitesse de rotation de la roue du véhicule ($\omega$roue).

5. Méthode selon la revendication 1, **caractérisée en ce que** la transmission est une transmission à variation continue comportant un convertisseur hydraulique (8) et la variable représentative (R) du rapport de transmission est le rapport de la vitesse de rotation ($\omega$bv) d'une turbine (82) du convertisseur hydraulique (8) sur la vitesse de rotation de la roue du véhicule ($\omega$roue).

6. Méthode selon la revendication 1, **caractérisée en ce que** la consigne de couple moteur est calculée en outre en fonction d'une estimation des pertes mécaniques dans l'entraînement du véhicule.

7. Méthode selon la revendication 1, **caractérisée en ce que** la consigne de couple moteur (CCmot) est calculée en outre en fonction d'une estimation de l'inertie (Jcc) des pièces entraînées en rotation par le groupe motopropulseur.

8. Méthode selon la revendication 1, **caractérisée en ce que** la consigne à la roue (CCroue) est fonction en outre de la vitesse du véhicule (Vv).

9. Méthode selon l'une des revendications 4 ou 5, **caractérisée en ce qu'**une consigne intermédiaire de couple moteur (CCbv) est affectée par un coefficient de convertisseur pour calculer la consigne de couple moteur (CCmot), le coefficient de convertisseur étant fonction du glissement (i) entre la turbine (82) et une pompe (81) du convertisseur (8).

10. Méthode selon l'une des revendications 4 ou 5, **caractérisée en ce que**, lorsque la vitesse du véhicule est inférieure à un seuil prédéterminé, la variable représentative (R) du rapport de transmission est issue de valeurs mémorisées en fonction du rapport sélectionné.

11. Système de commande d'un groupe motopropulseur (1) d'un véhicule, le groupe motopropulseur comportant un moteur (2) et une transmission (3, 3') pour changer de rapport de transmission, le système comportant :

- des moyens d'entrée (100) pour recevoir une information de demande de puissance (Acc) ;

- des moyens (100) pour calculer une consigne à la roue (CCroue) d'une grandeur physique en fonction de l'information de demande de puissance (Acc) ;

- des moyens de conversion (104, 104') pour déduire de la consigne à la roue (CCroue) une consigne du couple moteur (CCmot) ;

- des moyens de commande du moteur (11) pour qu'il délivre un couple moteur en fonction de la consigne de couple moteur (CCmot) ;

**caractérisé en ce que** le système comporte en outre :

- des moyens (104, 104') pour calculer en outre une variable représentative (R) du rapport de transmission, par le rapport d'une vitesse d'entrée de boîte ($\omega$bv) ou d'une vitesse du moteur ($\omega$mot) sur une vitesse liée à la vitesse de la roue ($\omega$roue), même pendant les changements de rapport de transmission ;

- la consigne de couple moteur (CCmot) étant calculée en fonction de la variable représentative (R) du rapport de transmission et de la consigne à la roue (CCroue).

Fig. 1

**Fig. 2**

EP 1 429 011 A1

EP 1 429 011 A1

**Fig. 3**

**Fig. 4**

Office européen
des brevets

**RAPPORT DE RECHERCHE EUROPEENNE**

Numéro de la demande

EP 03 29 3045

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2002/065596 A1 (YOSHINOYA DAISUKE ET AL) 30 mai 2002 (2002-05-30) | 1,4,8,9, 11 | F02D41/02 F02D11/10 |
| Y | * figure 3B * | 2,3,6,7, 10 | |
| | * alinéas '0035!,'0041!,'0042! * | | |
| X | EP 0 879 731 A (NISSAN MOTOR) 25 novembre 1998 (1998-11-25) * figure 3 * * colonne 10, ligne 5 - ligne 10 * * colonne 10, ligne 21 - colonne 11, ligne 8 * | 1,5,8,9, 11 | |
| Y | US 6 371 884 B1 (CHANNING DEREK ALBERT) 16 avril 2002 (2002-04-16) * figure 2 * * colonne 3, ligne 41 - ligne 63 * * colonne 7, ligne 29 - ligne 44 * | 2,3 | |
| D,Y | US 6 434 466 B1 (PALLETT TOBIAS JOHN ET AL) 13 août 2002 (2002-08-13) | 6,10 | **DOMAINES TECHNIQUES RECHERCHES (Int.Cl.7)** |
| A | * figure 5 * * colonne 1, ligne 37 - ligne 64 * * colonne 8, ligne 31 - ligne 65 * | 1,11 | F02D |
| D,Y | EP 1 188 602 A (NISSAN MOTOR) 20 mars 2002 (2002-03-20) * le document en entier * | 7 | |
| X | US 2002/082759 A1 (HYOUDOU HIDEKI ET AL) 27 juin 2002 (2002-06-27) * abrégé; figures 3,4 * * alinéas '0008!,'0063!-'0076! * | 1,4,8,9, 11 | |
| D,A | FR 2 785 961 A (RENAULT) 19 mai 2000 (2000-05-19) * le document en entier * | 3 | |

Le présent rapport a été établi pour toutes les revendications

| Lieu de la recherche | Date d'achèvement de la recherche | Examinateur |
|---|---|---|
| LA HAYE | 10 mars 2004 | Röttger, K |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                                                                                                
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**   EP 03 29 3045

La présente annexe indique les membres de la famille de brevets relatifs aux documents brevets cités dans le rapport de recherche européenne visé ci-dessus.

Lesdits members sont contenus au fichier informatique de l'Office européen des brevets à la date du

Les renseignements fournis sont donnés à titre indicatif et n'engagent pas la responsabilité de l'Office européen des brevets.

10-03-2004

| Document brevet cité au rapport de recherche | | Date de publication | Membre(s) de la famille de brevet(s) | | Date de publication |
|---|---|---|---|---|---|
| US 2002065596 | A1 | 30-05-2002 | JP | 2002166752 A | 11-06-2002 |
| EP 0879731 | A | 25-11-1998 | JP | 3475717 B2 | 08-12-2003 |
| | | | JP | 10324176 A | 08-12-1998 |
| | | | JP | 11001135 A | 06-01-1999 |
| | | | DE | 69806685 D1 | 29-08-2002 |
| | | | DE | 69806685 T2 | 21-11-2002 |
| | | | EP | 0879731 A2 | 25-11-1998 |
| | | | US | 6188943 B1 | 13-02-2001 |
| US 6371884 | B1 | 16-04-2002 | AUCUN | | |
| US 6434466 | B1 | 13-08-2002 | DE | 10014629 A1 | 18-01-2001 |
| | | | GB | 2350163 A ,B | 22-11-2000 |
| | | | GB | 2380776 A ,B | 16-04-2003 |
| EP 1188602 | A | 20-03-2002 | JP | 2002087117 A | 26-03-2002 |
| | | | EP | 1188602 A2 | 20-03-2002 |
| US 2002082759 | A1 | 27-06-2002 | JP | 2002187461 A | 02-07-2002 |
| FR 2785961 | A | 19-05-2000 | FR | 2785961 A1 | 19-05-2000 |
| | | | DE | 69905485 D1 | 27-03-2003 |
| | | | DE | 69905485 T2 | 18-12-2003 |
| | | | EP | 1128977 A1 | 05-09-2001 |
| | | | ES | 2192886 T3 | 16-10-2003 |
| | | | WO | 0029244 A1 | 25-05-2000 |
| | | | JP | 2003506236 T | 18-02-2003 |
| | | | US | 6547697 B1 | 15-04-2003 |

EPO FORM P0460

Pour tout renseignement concernant cette annexe : voir Journal Officiel de l'Office européen des brevets, No.12/82